# EUROPEAN PATENT APPLICATION

(11) **EP 4 622 049 A1**
(43) Date of publication of application: **24.09.2025**
(21) Application number: 24883607.4
(22) Date of filing: 21.02.2024
(51) Int. Cl.: H02J 7/00

(54) **CHARGING STATION, AND CHARGING STATION SYSTEM AND CONTROL METHOD THEREFOR**

(30) Priority: 25.01.2024 CN 202410104352
(71) Applicant: Tianjin Synergy Groups Co., Ltd., Dongli District Tianjin 300300 (CN)
(72) Inventor: CHEN, Peng, Tianjin 300300 (CN)
(74) Representative: HGF
(86) International application number: PCT/CN2024/077961
(87) International publication number: WO 2025/156339

(57) **Abstract**

A charging station, a charging station system and a control method thereof are provided. The control method includes: establishing a communication connection between a plurality of charging stations and a cloud; establishing a communication connection between the plurality of charging stations and a terminal; and establishing a communication connection between the cloud and the terminal; where in the operation process of a charging station of the plurality of charging stations, the charging station provides a charge/discharge management function for at least one rechargeable product; the at least one rechargeable product transmits data to the charging station through at least one of a physical connection or a wireless connection to achieve a data transmission function; and the charging station uploads the collected data to the cloud to achieve a data communication function.

## Description

This application claims priority to Chinese Patent Application No. 202410104352.5 filed with the China National Intellectual Property Administration (CNIPA) on Jan. 25, 2024, the disclosure of which is incorporated herein by reference in its entirety.

### TECHNICAL FIELD

The present application relates to the field of mobile power supplies, for example, to a charging station, a charging station system and a control method thereof.

### BACKGROUND

With the gradual popularization of portable applications for various types of electronic devices, the types of electronic devices carried around by users are gradually increasing, such as smartphones, laptops, cameras, and drones. Under the circumstances, the need to recharge these portable electronic devices at any time has become more common and thus promotes the development of the mobile power industry. In addition, the portable applications of electronic devices also provide users with greater flexibility to use the electronic devices anywhere. All these factors have led to an increase in the demand among users for mobile power supplies.

A conventional charging station device generally only has charging and discharging functions, that is, the conventional charging station device obtains power from a wall plug or by other fixed means through a connecting cable and provides a charging interface such as a common universal serial bus (USB) interface or a direct current (DC) interface to charge a mobile power supply. Such a single-function charging station device cannot achieve intelligent management of charging stations, thereby limiting the further popularization of charging stations.

### SUMMARY

The present application provides a charging station, a charging station system and a control method thereof to enrich the functions of a charging station, achieve the intelligent management of the charging station, and thus promote the further popularization of the charging station.

According to one aspect of the present application, a control method for a charging station system is provided. The method includes the following steps.

A communication connection is established between multiple charging stations and a cloud.

A communication connection is established between the multiple charging stations and a terminal.

A communication connection is established between the cloud and the terminal.

In the operation process of a charging station of the multiple charging stations, the charging station provides a charge/discharge management function for at least one rechargeable product; the at least one rechargeable product transmits data to the charging station through at least one of a physical connection or a wireless connection to achieve a data transmission function; and the charging station uploads the collected data to the cloud to achieve a data communication function.

According to another aspect of the present application, a charging station system is further provided. The charging station system includes multiple charging stations, a cloud, and a terminal.

A communication connection is established between the multiple charging stations and the cloud; a communication connection is established between the multiple charging stations and the terminal; and a communication connection is established between the cloud and the terminal.

In the operation process of a charging station of the multiple charging stations, the charging station provides a charge/discharge management function for at least one rechargeable product; the at least one rechargeable product transmits data to the charging station through at least one of a physical connection or a wireless connection to achieve a data transmission function; and the charging station uploads the collected data to the cloud to achieve a data communication function.

According to another aspect of the present application, a charging station is provided. The charging station includes an input interface, a conversion circuit, a power supply system, and a function module.

The input interface is connected to an external power supply voltage through an adapter wire.

The conversion circuit is electrically connected to the input interface and is configured to convert the external power supply voltage into an internal voltage adapted to the charging station.

The power supply system is electrically connected to the input interface, and the power supply system supplies power to the function module inside the charging station by using the external power supply voltage.

The function module includes a control circuit, a memory, and a wireless module. The control circuit is configured to control a rechargeable product to be charged and discharged to achieve a charge/discharge management function. The memory is configured to store data. The wireless module and the memory perform data transmission. The wireless module is configured to upload the collected data to the cloud to achieve a data communication function.

According to another aspect of the present application, a charging station is provided. The charging station includes a machine body and a movable mechanical arm.

Multiple charging slots are provided on the top of the machine body, and a charging interface is provided inside each of the multiple charging slots.

Each of the two ends of the movable mechanical arm is fixed on a respective one of two sides of the machine body. The length direction of the movable mechanical arm is consistent with the arrangement direction of the multiple charging slots. A partial structure of the movable mechanical arm in a locked state is located above the multiple charging slots to lock a rechargeable product placed inside a charging slot in the charging slot.

### BRIEF DESCRIPTION OF DRAWINGS

The drawings used in the description of embodiments will be briefly described below. The drawings described below illustrate part of embodiments of the present application, and those of ordinary skill in the art may obtain other drawings based on the drawings described below on the premise that no creative work is done.
FIG. 1 is a schematic diagram of the module connection of a charging station according to an embodiment of the present application;
FIG. 2 is a schematic diagram of the structure of a charging station system according to an embodiment of the present application;
FIG. 3 is a schematic diagram of another structure of a charging station system according to an embodiment of the present application;
FIG. 4 is a schematic diagram of the structure of a charging station according to an embodiment of the present application; and
FIG. 5 is a schematic diagram of the structure of a charging station with rechargeable products inserted according to an embodiment of the present application.

### DETAILED DESCRIPTION

To make the solutions of the present application better understood by those skilled in the art, the solutions in embodiments of the present application are described below clearly and completely in conjunction with drawings in the embodiments of the present application. Apparently, the embodiments described below are part, not all, of the embodiments of the present application. Based on the embodiments of the present application, all other embodiments obtained by those of ordinary skill in the art without creative work are within the scope of the present application.

It is to be noted that the terms "first", "second", and the like in the description, claims, and drawings of the present application are used to distinguish between similar objects and are not necessarily used to describe a particular order or sequence. It is to be understood that the data used in this manner is interchangeable in appropriate cases so that the embodiments of the present application described herein can be implemented in an order not illustrated or described herein. In addition, the terms "including", "having", and any other variations thereof are intended to cover a non-exclusive inclusion. For example, a process, a method, a system, a product or a device that includes a series of steps or units may include not only the expressly listed steps or units but also other steps or units that are not expressly listed or are inherent to the process, the method, the product or the device.

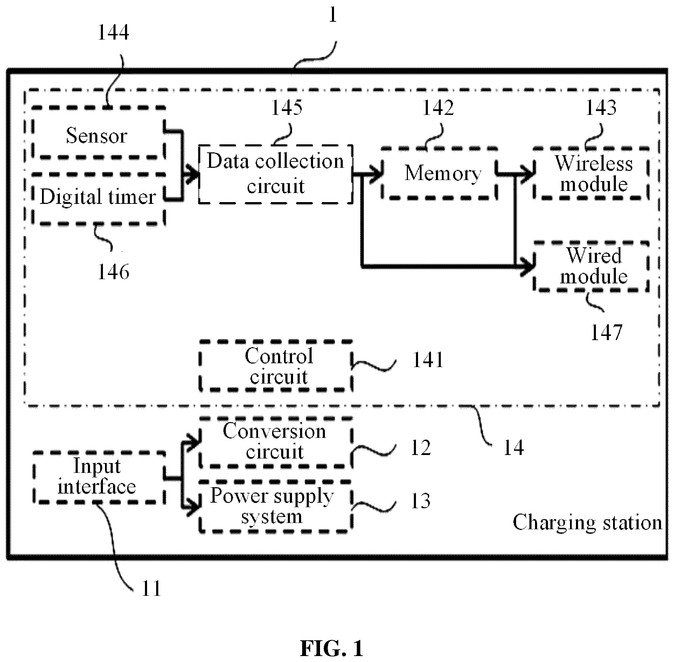

The embodiments of the present application provide a charging station. The charging station has a wide range of applicable scenarios and applicable places and for example, is applicable to hospitals, schools, shared offices, enterprises, public consumer places, outdoor camps, and the like. FIG. 1 is a schematic diagram of the module connection of a charging station according to an embodiment of the present application. With reference to FIG. 1, the charging station 1 includes an input interface 11, a conversion circuit 12, a power supply system 13, and a function module 14.

The input interface 11 is connected to an external power supply voltage through an adapter wire. For example, the adapter wire is fixedly connected to an electric supply network such as a wall plug or a power strip, and the input interface is an alternating current (AC) interface.

The conversion circuit 12 is electrically connected to the input interface 11, and the conversion circuit 12 is configured to convert the external power supply voltage into an internal voltage adapted to a charging station 1. Inside the charging station 1, the input interface 11 is connected to the conversion circuit 12 provided inside the charging station 1 to achieve a charge/discharge function. For example, the charging station 1 is configured to obtain power externally through the AC interface and charge a rechargeable product placed on the charging station 1 through the conversion circuit 12 and a DC interface. The conversion circuit 12 may be configured to have an AC-to-DC function, that is, the power input from the input interface 11 is processed through the conversion circuit 12 and is output from the DC interface.

The power supply system 13 is electrically connected to the input interface 11, and the power supply system 13 supplies power to the function module 14 inside the charging station 1 by using the external power supply voltage. Inside the charging station 1, the input interface 11 is connected to the power supply system 13 provided inside the charging station 1 to supply power to various function modules 14 provided inside the charging station 1, thereby ensuring that the charging station 1 successfully achieves its functions.

The function module 14 includes a control circuit 141, a memory 142, and a wireless module 143. The control circuit 141 is configured to control a rechargeable product to be charged and discharged to achieve a charge/discharge management function. The memory 142 is configured to store data. The wireless module 143 and the memory 142 perform data transmission. The wireless module 143 is configured to upload the collected data to the cloud to achieve a data communication function.

Therefore, the embodiments of the present application provide an intelligent charging station, a charging station system and a control method thereof that integrate a charge/discharge management function, a data transmission function, and a data communication function. The charging station provided by the embodiments of the present application can provide a charge/discharge function for a rechargeable product, and the rechargeable product can charge one or more various types of portable electronic devices. In the process where the charging station is connected to the rechargeable product for achieving the charge/discharge function, the charging station may transmit the state data of the rechargeable product and the environmental data of the charging station through a physical connection or a wireless connection, store these data in the memory, and upload various types of data stored in the memory to the cloud through the wireless module to achieve the data communication function. Therefore, the control method provided by the embodiments of the present application integrates a charge/discharge management function, a data transmission function, and a data communication function, has a wider application range, and is more intelligent.

On the basis of the above embodiments, optionally, the function module 14 further includes a sensor 144. The type of sensor 144 may be determined in practical applications according to the specific type of data that needs to be detected. For example, if temperature detection needs to be performed, the sensor 144 is set as a temperature sensor; if humidity detection needs to be performed, the sensor 144 is set as a humidity sensor; if temperature detection and humidity detection need to be performed, the sensor 144 includes a temperature sensor and a humidity sensor; if environmental altitude detection needs to be performed, the sensor 144 further includes an altitude sensor 144.

Optionally, the function module 14 further includes a data collection circuit 145. The charging station 1 may achieve a function to manage and control the state of the charging station 1 according to the environmental data detected by the sensor 144. In an embodiment, the environmental data may be fed back through the data collection circuit 145, stored in the memory 142, and further sent to a user terminal (for example, a mobile application (APP)) through the wireless module 143 for a user to browse or transfer the data. In another embodiment, the state of the charging station 1 may be further controlled by feeding back and judging the environment detection data. For example, the data may be fed back through the data collection circuit 145 and stored in the memory 142; when the user browses or transfers the data through the terminal, the data may be fed back to the control circuit 141 through the data collection circuit 145, and the power supply of the charging station 1 may be controlled to be on or off by the control circuit 141 to achieve the customized requirements for the charging station.

It is to be noted that the type of the memory 142 in the embodiments of the present application may be determined according to the specific type of data that needs to be stored. For example, all or part of the collected data is stored in the memory 142 through the data collection circuit 145. The data in the memory 142 may be set to be periodically refreshed and cleared to release storage space or the data in the memory 142 may be permanently stored and the storage space, when becoming insufficient, may be alerted and updated in a set manner. The memory 142 may be configured as a type that is mounted on the circuit board or as an externally connectable memory card.

In the above embodiments, the type of the wireless module 143 includes a Bluetooth module, a wireless fidelity (WI-FI) network module, a cellular network module, an Internet of Things (IoT) module, a long-range radio (LORA) module, or the like. The data stored in the memory 142 or the data collected by the data collection circuit 145 in real time may be uploaded to the cloud through the wireless module 143 to achieve the processes and functions of data collection, storage, and analysis. The wireless module 143 is independently powered by the power supply system 13 to ensure that when the input terminal (including the electric supply network) of the input interface 11 encounters power failure, the connection between the wireless module 143 and the cloud is continuously maintained or temporarily maintained. In this manner, the data and the operating state of the charging station 1 may be continuously monitored, thereby preventing the charging station 1 from being disconnected.

Optionally, the sensor 144 provided inside the charging station 1 may also perform environment monitoring on the interior of the charging station 1. For example, the sensor 144 may monitor the temperature of a high-heating region inside the charging station 1 (for example, the highest temperature point of the power supply system 13), the temperature of an electronic component inside the charging station 1 (for example, the highest temperature point of a chip), and the like. By monitoring and analyzing the data of the charging station 1, the product safety can be guaranteed.

On the basis of the above embodiments, optionally, the function module 14 further includes a digital timer 146. The type of the digital timer 146 in the embodiments of the present application may be set according to actual requirements. In the embodiments of the present application, various data of the charging station 1 may be collected through the digital timer 146, including the duration when the charging station 1 is continuously connected to the wall plug, the duration when the charging station 1 does not perform any operation, and the like.

In an embodiment, optionally, the charging station 1 may achieve a function to manage and control the state of the charging station 1 according to the data of the digital timer 146. For example, the digital timer 146, in cooperation with the data collection circuit 145, may determine that the charging station 1 and the rechargeable product placed on the charging station 1 are in a long-term storage state when the charging station 1 and the rechargeable product have not entered an operating state for a long time or have not had an output exceeding a static consumption for a long time. In the long-term storage state, the self-discharge function is automatically turned on by the control circuit 141, and the rechargeable product is self-discharged to a safe charge level, for example, a charge level of 20% or below, to achieve the purpose of safe storage, thereby achieving the safety management function of the charging station 1.

In another embodiment, optionally, the charging station 1 may achieve a function to manage and control the state of the charging station 1 according to the data of the digital timer 146. For example, the digital timer 146, in cooperation with the control circuit 141, may disable a wall-plug function after determining the long-term storage state to ensure that the charging station 1 cannot obtain power from the wall plug before the user or the system administrator manually turns off the state. The charging station 1 is not charged, and the rechargeable product placed on the charging station 1 is not charged either. When the entire set of assembled charging station 1 is not charged, the charge level of the charging station 1 is gradually reduced over time until the power of the charging station 1 is completely exhausted, and then the charging station 1 is recharged to reactivate the battery cell. After the battery cell is reactivated, the system consisting of the charging station 1 and the rechargeable product may be restored to the previous state. Therefore, the charging station 1 has a restoration function after reactivation.

On the basis of the above embodiments, optionally, the function module further includes a wired module 147. The type of wired module 147 may include an interface such as an RJ45 interface or a USB interface, and these types of interfaces have data transmission functions. In practical applications, with the connection to a mobile terminal device through the wired module 147 and a network connecting cable, the data stored in the memory 142 or the data collected by the data collection circuit 145 in real time may be checked on the APP of the mobile terminal device.

On the basis of the above embodiments, optionally, the charging station 1 may be connected to the terminal, for example, to a mobile APP. In some embodiments, the user or the system administrator may check various types of data of the charging station 1 (including the data stored in the memory 142 or the data collected by the data collection circuit 145 in real time) wirelessly by using the terminal such as a mobile APP. In other embodiments, with the connection to the mobile terminal device through the wired module 147 and the network connecting cable, the data may also be checked on the APP of the mobile terminal device.

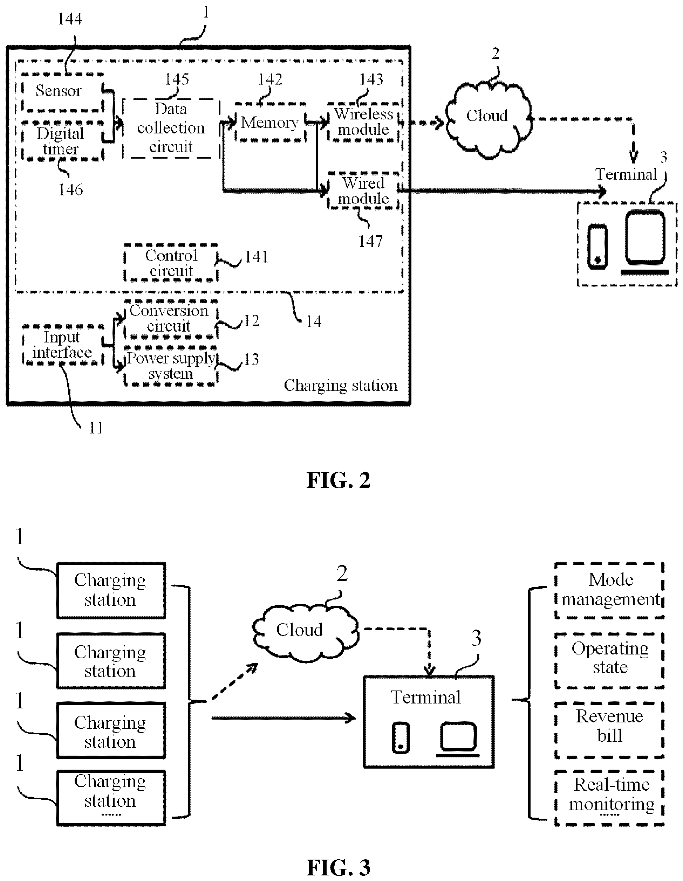

The embodiments of the present application further provide a charging station system. FIG. 2 is a structure diagram of a charging station system according to an embodiment of the present application. With reference to FIG. 2, the charging station system includes a charging station 1 provided by any embodiment of the present application, a cloud 2, and a terminal 3. The operating principle and effects of the charging station system are similar to those described in the above embodiments, and the details are not repeated herein.

FIG. 3 is a schematic diagram of another structure of a charging station system according to an embodiment of the present application. With reference to FIG. 3, the charging station system includes multiple charging stations 1, a cloud 2, and a terminal 3.

A communication connection is established between the multiple charging stations 1 and the cloud 2; a communication connection is established between the multiple charging stations 1 and the terminal 3; and a communication connection is established between the cloud 2 and the terminal 3.

In the operation process of the charging station 1, the charging station 1 provides a charge/discharge management function for at least one rechargeable product; the at least one rechargeable product transmits data to the charging station 1 through at least one of a physical connection or a wireless connection to achieve a data transmission function; and the charging station 1 uploads the collected data to the cloud 2 to achieve a data communication function.

The cloud 2 is provided with a cloud server and a cloud memory. The terminal is a terminal device or an APP having an information processing function. The user roles of the terminal include a system operator, a system administrator or a consumer user. The system operator may consist of one or more enterprises. For example, when multiple charging stations 1 are deployed in a shared office space, multiple enterprises sharing the space may all be set to play the role of the system operator to manage all the charging stations 1 deployed in the space. The system administrator is a charging station provider and/or a cloud service provider, and the system administrator may set and manage the functions of the charging station 1 and the access authority of these functions according to actual requirements. The consumer user may be any user within a limited region under a limited usage condition and may, through an information processing terminal including a mobile APP, use the charging station 1 and the rechargeable product placed on the charging station 1 and set the functions during use.

Optionally, the mode management of each charging station, the monitoring of the internal operating state of the charging station, the bill inquiry, the usage state real-time monitoring, and the like may be completed by performing operations on the terminal 3.

The embodiments of the present application further provide a control method for a charging station system. The control method for a charging station system is applied to a charging station system provided by any embodiment of the present application. In conjunction with FIGS. 1 to 3, the control method for a charging station system includes the following steps.

A communication connection is established between multiple charging stations 1 and a cloud 2.

A communication connection is established between multiple charging stations 1 and a terminal 3.

A communication connection is established between the cloud 2 and the terminal 3.

In the operation process of a charging station 1 of multiple charging stations 1, the charging station 1 provides a charge/discharge management function for at least one rechargeable product; the at least one rechargeable product transmits data to the charging station 1 through at least one of a physical connection or a wireless connection to achieve a data transmission function; and the charging station 1 uploads the collected data to the cloud 2 to achieve a data communication function.

Therefore, the control method provided by the embodiments of the present application integrates a charge/discharge management function, a data transmission function, and a data communication function, has a wider application range, and is more intelligent.

With continued reference to FIGS. 1 to 3, on the basis of the above embodiments, optionally, the control method further includes a usage state collection function and specifically includes the following steps.

Initial pairing information between the charging station 1 and a rechargeable product placed on the charging station 1 is acquired.

A serial number of the rechargeable product placed on the charging station 1 is acquired in real time, and comparative analysis is performed on the serial number and the initial pairing information to determine whether the placement position of the rechargeable product changes. Optionally, the serial number of the rechargeable product placed on each charging station 1 is scanned. For example, the charging station 1 acquires the serial number of the rechargeable product placed on the charging station 1 through wireless communication, and the data collection circuit 145 provided inside the charging station 1 collects the serial number of the rechargeable product and stores the serial number in the memory 142. Alternatively, the serial number of the rechargeable product is acquired when the rechargeable product is physically connected to an interface provided inside a charging slot of the charging station 1, and the data collection circuit 145 provided inside the charging station 1 collects the serial number of the rechargeable product and stores the serial number in the memory 142.

If the placement position of the rechargeable product changes, pairing information between the charging station 1 and the rechargeable product is refreshed.

Optionally, in an embodiment, the wireless communication may be implemented through the wireless module 143 and includes the Bluetooth, a WI-FI network, a cellular network, the IOT, the LORA, or the like. The system administrator may pair a charging station 1 with a rechargeable product placed on the charging station 1 by performing operations in the background of the system, perform binding on the two, and obtain the initial pairing information. For example, by regularly scanning the rechargeable products placed on the charging station 1 by the wireless module 143 provided inside the charging station 1, the serial numbers of the rechargeable products currently placed on the charging station 1 may be collected in real time, and by performing comparative analysis on the serial numbers, whether the rechargeable products initially paired with the charging station are still placed on the charging station 1 may be known. If more than one charging station 1 is placed in a region or more than one charging station 1 is placed in an open space (for example, in a shopping mall), there may be a case where a user takes a rechargeable product from the first charging station 1 and then places it on the second charging station 1. In this case, the function of re-pairing while scanning may be preset in the charging station system. For example, through Bluetooth scanning, the pairing and binding data may be refreshed in real time, that is, the pairing information between the charging station 1 and the rechargeable product may be refreshed. The above data is uploaded to the cloud server in real time to allow the system administrator to check and analyze the data in the background of the system.

With continued reference to FIGS. 1 to 3, on the basis of the above embodiments, optionally, the control method further includes a state collection function and specifically includes the following steps.

The usage information of multiple rechargeable products is collected. The usage information includes at least one of information on the type of interface used by a rechargeable product, a usage duration of a rechargeable product or the type of protection triggered by a rechargeable product.

The usage information is uploaded to the cloud 2.

Optionally, a method for collecting the usage information includes the following steps.

The charging station 1 acquires the usage information of the rechargeable product through wireless communication, and the data collection circuit 145 provided inside the charging station 1 collects the usage information and stores the usage information in the memory 142.

Alternatively, the usage information is acquired when the rechargeable product is physically connected to the interface provided inside a charging slot of the charging station 1, and the data collection circuit 145 provided inside the charging station 1 collects the usage information and stores the usage information in the memory 142.

In an embodiment, a second data collection circuit and a second memory are further provided inside the rechargeable product. The second data collection circuit may store in the second memory usage information such as which type of interface is specifically enabled, a usage duration, and what type of protection occurs during the use of the rechargeable product. The charging station 1 may acquire the above data and information through a wireless connection such as the Bluetooth, a WI-FI network, a cellular network, the IOT, the LORA, and the like and upload the data and the information to the cloud 2 to form the usage information of the rechargeable product, thereby making product upgrade and maintenance convenient. When the charging station 1 forms a physical connection with the rechargeable product through an interface (any form of interface having a data transmission function and/or a charging function, such as a PIN interface or a USB interface (for example, a USB-C interface)) provided inside the charging slot, the data collection circuit 145 of the charging station 1 acquires the above data and information and uploads the data and the information to the cloud 2 to form the usage information of the rechargeable product, thereby making product upgrade and maintenance convenient. The system administrator may check and analyze the data in the background of the system.

With continued reference to FIGS. 1 to 3, on the basis of the above embodiments, optionally, the control method further includes a real-time monitoring function and specifically includes the following steps.

The monitoring information of multiple rechargeable products is collected. The monitoring information includes at least one of a cell temperature of a rechargeable product, a temperature at a temperature sampling point set inside a rechargeable product, a remaining charge level of a battery pack of a rechargeable product or a voltage of a battery pack of a rechargeable product. Optionally, the charging station 1 acquires the monitoring information through wireless communication, and the data collection circuit 145 provided inside the charging station 1 collects the monitoring information and stores the monitoring information in the memory 142. Alternatively, the monitoring information is acquired when the rechargeable product is physically connected to the interface provided inside a charging slot of the charging station 1, and the data collection circuit 145 provided inside the charging station 1 collects the monitoring information and stores the monitoring information in the memory 142.

The monitoring information is uploaded to the cloud 2.

In an embodiment, the monitoring information is acquired through communication using an interface (any form of an interface having a data transmission function and/or a charging function, such as a PIN interface or a USB interface (for example, a USB-C interface)) provided inside the charging slot and/or through wireless communication (including the Bluetooth, a WI-FI network, a cellular network, the IoT, the LORA, and the like), and data interaction is performed in real time. The product data of the rechargeable product inserted into the charging slot (which includes the temperature of the cell, the temperature at the temperature sampling point, the remaining charge level of the battery pack, the voltage of the battery pack, and the like and may be preset by the system administrator according to the specific requirements) may be uploaded in real time through the platform of the charging station 1, thereby achieving the purpose of monitoring the operating state of the charging station 1 in real time. The system administrator may check and analyze the data in the background of the system.

With continued reference to FIGS. 1 to 3, on the basis of the above embodiments, optionally, the control method further includes a self-discharge function and specifically includes the following steps.

A digital timer 146 provided inside the charging station 1 determines whether a rechargeable product placed on the charging station 1 is in a long-term storage state.

If the rechargeable product is in the long-term storage state, the rechargeable product is discharged to a safe charge level under the control of a control circuit.

Optionally, the method for determining whether the rechargeable product is in the long-term storage state includes the following steps.

If the rechargeable product does not enter an operating state or the duration when the rechargeable product does not have an output exceeding a static consumption exceeds a set duration, the rechargeable product is in the long-term storage state.

In an embodiment, the digital timer 146 provided inside the charging station 1, in cooperation with the data collection circuit 145, may determine that the charging station 1 and the rechargeable product placed on the charging station 1 are in the long-term storage state when the charging station 1 and the rechargeable product have not entered an operating state for a long time or have not had an output exceeding the static consumption for a long time. After the charging station 1 determines the presence of the long-term storage state, the self-discharge function may be set to be automatically turned on by the control circuit 141 of the charging station 1, and the rechargeable product is self-discharged to a safe charge level, for example, a charge level of 20% or below, thereby achieving the purpose of safe storage.

With continued reference to FIGS. 1 to 3, on the basis of the above embodiments, optionally, the control method further supports a function to connect to a wall plug for a long time and specifically includes the following steps.

The digital timer 146 provided inside the charging station 1 determines whether the rechargeable product placed on the charging station1 is in a long-term storage state.

If the rechargeable product is in the long-term storage state, a wall-plug function is disabled to enable the charging station 1 no longer to charge the rechargeable product. After the power of the rechargeable product and/or the charging station 1 is completely exhausted, the rechargeable product and/or the charging station 1 are recharged to reactivate a battery cell, and the charging station system is restored to an initial state. Alternatively, after the power of the rechargeable product and the charging station 1 is exhausted to a set value, the rechargeable product and the charging station 1 are recharged to a full charge level, and the charging station 1 is restored to an initial state. The set value may be set by the system administrator. The set value prevents the power of the rechargeable product and the charging station 1 from being completely exhausted, thereby prolonging the service life of the battery cell, because if the power of the battery product is completely exhausted, the service life of the battery cell will be reduced.

In an embodiment, the control method for a charging station system further includes the following steps.

The digital timer 146 provided inside the charging station 1 determines whether the rechargeable product placed on the charging station 1 is in a long-term storage state.

If the rechargeable product is in the long-term storage state and the duration when the rechargeable product is in the long-term storage state exceeds a first duration, the rechargeable product is discharged to a safe charge level under the control of a control circuit.

In another embodiment, the control method for a charging station system further includes the following steps.

The digital timer 146 provided inside the charging station 1 determines whether the rechargeable product placed on the charging station 1 is in a long-term storage state.

If the rechargeable product is in the long-term storage state and the duration when the rechargeable product is in the long-term storage state exceeds a second duration, a wall-plug function is disabled to enable the charging station 1 no longer to charge the rechargeable product. After the power of the rechargeable product and/or the charging station 1 is completely exhausted, the rechargeable product and/or the charging station 1 are recharged to reactivate a battery cell, and the charging station system is restored to an initial state. Alternatively, after the power of the rechargeable product and the charging station 1 is exhausted to a set value, the rechargeable product and the charging station 1 are recharged to a full charge level, and the charging station 1 is restored to an initial state.

The set value is set by the system administrator. The set value prevents the power of the rechargeable product and the charging station 1 from being completely exhausted, thereby prolonging the service life of the battery cell. The second duration is longer than the first duration.

Optionally, the method for determining whether the rechargeable product is in the long-term storage state includes the following steps.

If the rechargeable product does not enter an operating state or the duration when the rechargeable product does not have an output exceeding a static consumption exceeds a set duration, the rechargeable product is determined to be in the long-term storage state.

In an embodiment, the digital timer 146, in cooperation with the control circuit 141, may disable a wall-plug function after determining the presence of the long-term storage state, that is, the charging station 1 cannot obtain power from the wall plug unless the user or the system administrator manually turns off the state. The charging station 1 is not charged, and the rechargeable product placed on the charging station 1 is not charged either. When the charging station 1 is not charged, the charge level of the charging station 1 is gradually reduced over time until the power of the charging station 1 is completely exhausted, and then the charging station 1 is recharged to reactivate the battery cell.

With continued reference to FIGS. 1 to 3, on the basis of the above embodiments, optionally, the control method further includes a charge management function and specifically includes the following steps.

A real-time charge level of multiple rechargeable products is collected. Optionally, the charging station 1 acquires the real-time charge level of the rechargeable product through wireless communication, and the data collection circuit 145 provided inside the charging station 1 collects the real-time charge level and stores the real-time charge level in the memory 142. Alternatively, the real-time charge level is acquired when the rechargeable product is physically connected to the interface provided inside a charging slot of the charging station 1, and the data collection circuit 145 provided inside the charging station 1 collects the real-time charge level and stores the real-time charge level in the memory 142.

Different charge rates are matched for rechargeable products having different real-time charge levels based on a preset charge management strategy under the control of the control circuit 141, thereby prolonging the service life of the battery cell and increasing the service life of the rechargeable product.

Optionally, the preset charge management strategy is that with at least two charge level ranges set, the charge rates are different in different charge level ranges, where the higher the charge level, the lower the charge rate.

For example, the preset charge management strategy is as follows.

If the real-time charge level of the rechargeable product is higher than a first set charge level (for example, 90% of the total charge level), the rechargeable product is charged at a first charge rate (for example, at 10 W).

If the real-time charge level of the rechargeable product is lower than a second set charge level (for example, 20% of the total charge level), the rechargeable product is charged at a second charge rate (for example, at 90 W).

The first set charge level is higher than the second set charge level, and the first charge rate is lower than the second charge rate.

In an embodiment, the data collection circuit 145 provided inside the charging station 1 cooperates with the control circuit 141 provided inside the charging station 1. When the rechargeable product is placed in a charging slot of the charging station 1, the data collection circuit 145 may acquire the real-time charge level of the rechargeable product in real time. Through the preset charging management strategy (which, for example, is set by the system administrator), the function to adjust the charge rates of the rechargeable products having different charge levels can be achieved under the control of the control circuit 141. For example, to meet the demands of the user for quick access and improve the utilization value of the entire charging station 1, the following setting may be set: when the charge level of the rechargeable product is 90%, the charge power is 10 W; when the charge level of the rechargeable product is 20%, the charge power is 90 W. That is, the rechargeable product having a low charge level is quickly charged, and the rechargeable product having a high charge level is slowly charged. Therefore, the demands of the user for quick access can be met while the usage rule of the battery cell is complied with.

It is to be noted that the specific values of the first set charge level and the second charge level in the embodiments of the present application can be set in practical applications according to requirements and for the number of set charge levels (that is, the ranks of the charge level ranges) in the embodiments of the present application, one or more set charge levels in different ranks may be set according to actual usage scenarios and may be specifically set by the administrator of the charging station.

With continued reference to FIGS. 1 to 3, on the basis of the above embodiments, optionally, the process of determining the charge rate further includes the following step: the charge rate is determined in combination with the temperature of the charging station 1 and/or the temperature of the rechargeable product as well as the charge level of the rechargeable product. Through the above setting, both the temperature and the charge level simultaneously become the basis for determining the charge rate, thereby improving the safety of the system.

Specifically, the data collection circuit 145 provided inside the charging station 1 collects temperature information, and a charging rate is matched for the rechargeable product according to the temperature information and the real-time charge level of the rechargeable product.

Alternatively, the charging station 1 acquires the temperature information of the rechargeable product through wireless communication, and the data collection circuit 145 provided inside the charging station 1 collects the temperature information and stores the temperature information in the memory 142; or the temperature information is acquired when the rechargeable product is physically connected to the interface provided inside a charging slot of the charging station 1, and the data collection circuit 145 provided inside the charging station 1 collects the temperature information and stores the temperature information in the memory 142; then a charging rate is matched for the rechargeable product according to the temperature information and the real-time charge level of the rechargeable product.

With continued reference to FIGS. 1 to 3, on the basis of the above embodiments, optionally, the charge management function further includes the following step.

Different charge rates are matched for different rechargeable products based on the preset charging management strategy under the control of the control circuit 141 so that the rechargeable products are independently charged without affecting each other.

Optionally, the preset charging management strategy may be that a power demand of a rechargeable product is acquired and the rechargeable product is charged according to the power demand.

With continued reference to FIGS. 1 to 3, on the basis of the above embodiments, optionally, the control method further includes an environment detection function and, in an embodiment, specifically includes the following steps.

A sensor provided inside the charging station 1 detects environment information. Optionally, the environment information includes temperature information, humidity information, smoke concentration information, and ambient altitude information.

The data collection circuit 145 provided inside the charging station 1 collects the environment information and stores the environment information in the memory 142.

Optionally, the control method further includes the following step: the environment information is synchronized to the terminal 3.

Optionally, the control method further includes the following steps: the data collection circuit 145 feeds the environment information back to the control circuit 141, and the control circuit 141 controls the operating state of the charging station 1. Optionally, the operating state of the charging station 1 includes: power-on and power-off.

Optionally, the step where the data collection circuit 145 feeds the environment information back to the control circuit 141 and the control circuit 141 controls the operating state of the charging station 1 includes at least one of the following steps.

If a detected ambient temperature is higher than a first set temperature, the charging station 1 is controlled to reduce the charge power.

If the detected ambient temperature is higher than a second set temperature, the charging station 1 is controlled to cut off a power supply.

If the detected ambient temperature is higher than a third set temperature, an emergency pack provided inside the charging station 1 is controlled to be opened and release a cooling substance. The second set temperature is higher than the first set temperature, and the third set temperature is higher than the second set temperature.

In an embodiment, a sensor is provided inside the charging station 1, and the type of the sensor may be customized according to the specific data types that need to be detected in practical applications. For example, when the temperature detection and the humidity detection need to be performed, the temperature and the humidity may be monitored by providing a temperature sensor and a humidity sensor inside the charging station 1. For example, when the ambient altitude detection needs to be performed, the ambient altitude detection may be performed by providing an ambient altitude sensor inside the charging station 1. For example, when the smoke detection needs to be performed, the smoke detection may be performed by providing a smoke sensor inside the charging station 1. When it is detected that smoke is generated in the charging station 1, under the control of the control circuit 141, the input from the charging station 1 is immediately cut off, the charging of the rechargeable product by the charging station 1 is cut off, and the cooling substance in the emergency pack is released. At the same time, the alarm information is sent to the mobile APP of the user or the system administrator.

In an embodiment, a temperature sensor is provided inside the charging station 1 to detect the temperature. The charging station 1 is further provided with the control circuit 141. When it is monitored that the ambient temperature inside the charging station 1 exceeds a certain temperature (the first set temperature), the control circuit 141 controls the charging station 1 to automatically reduce the charge power, and the charge rates of all the rechargeable products are reduced. The charging station 1 still operates normally but at a slower charge speed. When it is monitored that the ambient temperature inside the charging station 1 exceeds a slightly higher temperature (the second set temperature), the control circuit 141 controls the charging station 1 to automatically stop working, and the power supply is cut off and no longer charges the charging station 1. At the same time, the charging station 1 no longer charges the rechargeable product. When it is monitored that the ambient temperature inside the charging station 1 exceeds a higher temperature (the third set temperature), the emergency pack inside the charging station 1 is automatically opened and releases the cooling substances stored therein (including dry powder and other cooling substances that are harmless to the human body and the environment), thereby achieving the effects of early warning, cooling in advance, and prevention of the occurrence of events such as open flames. The above temperature detection data may be preset (through the terminal, for example, the mobile APP) and controlled by the control circuit 141 of the charging station 1. For example, when the temperature sensor monitors that the ambient temperature inside the charging station 1 exceeds 100 °C, the charging station 1 is controlled to automatically stop working, and the power supply is cut off and no longer charges the charging station 1. At the same time, the charging station 1 no longer charges the rechargeable product. Optionally, when temperature sensor monitors that the ambient temperature inside the charging station 1 exceeds 130 °C, the emergency pack inside the charging station 1 is opened and releases the cooling substances stored therein (including dry powder and other cooling substances that are harmless to the human body and the environment), thereby achieving the effects of early warning, cooling in advance, and prevention of the occurrence of events such as open flames. At the same time, the alarm information is sent to the mobile APP of the user or the system administrator.

Optionally, if only the environment detection data needs to be collected, the environment detection data may be fed back through the data collection circuit 145 and stored in the memory 142, and the user may browse or transfer the data through the terminal, such as the mobile APP.

Optionally, if not only the environment detection data needs to be collected, the state of the charging station 1 further needs to be controlled by feeding back and judging the environment detection data. The data may be fed back by the data collection circuit 145 and stored in the memory 142. While the user browses or transfers the data through the terminal, for example, on the mobile APP, the data may be fed back to the control circuit 141 through the data collection circuit 145, and then the on/off state of the power supply of the charging station 1 may be controlled, thereby meeting the customized requirements of the user or the system administrator and guaranteeing the safety, usage strategy and operating duration of the charging station 1 in different environments.

With continued reference to FIGS. 1 to 3, on the basis of the above embodiments, optionally, the control method further includes an environment detection function and a warning mechanism function and, in an embodiment, specifically includes the following steps.

Operating parameter information of the charging station 1 is detected in real time.

The data collection circuit 145 provided inside the charging station 1 collects the operating parameter information and stores the operating parameter information in the memory 142 and/or uploads the operating parameter information to the cloud 2.

Optionally, after the operating parameter information of the charging station 1 is detected in real time, the control method further includes the following steps.

The control circuit 141 provided inside the charging station 1 compares the operating parameter information with a preset data model and gives an alarm if the data is abnormal; and/or

Warning information is sent to the terminal 3 after an abnormality is found through analysis in the cloud 2.

Optionally, the specific type of data that needs to be detected may be customized in practical applications. For example, a temperature sensor is provided inside the charging station 1 to monitor the temperature. For example, data, such as the temperature, the voltage, and the current, is monitored in real time according to requirements, and the data monitored in real time may be stored in the memory 142 by the data collection circuit 145 provided inside the charging station 1 or may be wirelessly uploaded to the cloud in real time. The control circuit 141 provided inside the charging station 1 compares the real-time data with a preset data model, and warning information is sent to the administrator in time according to the abnormal data obtained from the comparison with the model, thereby avoiding potential safety hazards. The warning information may be reminded in the following manner: a buzzer is provided inside the charging station 1, and the buzzer gives different types of alarms according to different types of data information. The warning information may also be reminded in the following manner: the data is wirelessly fed back to a cloud database, and after the analysis finds an abnormality, a reminder message is sent to the terminal, for example, to the mobile APP to remind the user or the system administrator, thereby achieving the purpose of early warning.

Optionally, the charging station 1 may be connected to the mobile APP in a wireless or wired manner, and the user or the system administrator may obtain and analyze the data in real time and preform basic management operations on the charging station 1 through the mobile APP.

To enable the system administrator to manage the charging station 1 more conveniently, the system administrator may deploy a strategy for confirming the access of the rechargeable product. For example, when the user needs to access a rechargeable product and takes the rechargeable product from the charging station 1, a several-digit code is displayed on the rechargeable product, and the user inputs the code on the mobile APP for confirmation. After the mobile APP and the rechargeable product are confirmed to be paired through a wireless connection such as the Bluetooth, a WI-FI network, a cellular network, the IOT, the LORA, and the like, that is, the pairing is confirmed successfully, the user may start to use the rechargeable product. The charging station 1 may monitor the access and usage of the rechargeable product. During the above process, the process of confirming the serial number of the rechargeable product taken for use and any problematic points that occur during the process will be recorded once.

To enable the system administrator to manage the charging station 1 more conveniently, the system administrator may deploy a strategy for the usage of the rechargeable product. Based on the above strategy, the administrator, through the terminal, may monitor the modules including the mode management, operating state monitoring, bill inquiry, usage state real-time monitoring, and the mail system of the charging station 1 and acquire data from these modules in real time. Further, the modules selected to be open to the user may be set as the permission modules for the user. For example, the system administrator may perform mode management through the terminal 3. The system administrator may deploy the usage strategy as various strategies including a pay-to-use system, a free usage system, and a strategy of different charges for different locations. For example, the system administrator may perform operation state monitoring through the terminal 3 and determine in real time whether a charging station 1 is operating normally regardless of where the charging station 1 is located, thereby achieving the basic monitoring of the safety of the charging station 1. For example, the system administrator may perform bill checking through the terminal 3, and when the system administrator sets a pay-to-use mode, the system administrator may check the bill for each period of time through the terminal. For example, the system administrator may perform real-time data monitoring and extraction on the charging station 1 and the rechargeable product through the terminal, thereby making the analysis of the safety state of the charging station 1 and the usage state of the rechargeable product convenient. The system administrator may set up an email reminder function when the user uses the rechargeable product. For example, when the user needs to register or pay the bill, the registration information and the payment information may be sent to the user's device and the system administrator's device through the email system.

With continued reference to FIGS. 1 to 3, on the basis of the above embodiments, optionally, the charging station 1 and the rechargeable product each further have a firmware version upgrade function. For example, after the charging station 1 receives a charging station upgrade command, the charging station 1 performs data communication with the cloud 2, or the charging station 1 is connected to the administrator's APP through a network cable to acquire a firmware version upgrade installation package, and then the charging station 1 autonomously performs the firmware version upgrade. The charging station upgrade command received by the charging station 1 may be sent by the system administrator to the charging station 1 through the cloud server or the mobile APP. After the charging station 1 receives a rechargeable product upgrade command, the charging station 1 performs data communication with the cloud 2, or the charging station 1 is connected to the administrator's APP through a network cable to acquire a firmware version upgrade installation package, and in the case where the rechargeable product performs wireless data communication with the charging station 1 through the wireless module 143, or the rechargeable product is connected to a charging interface through the wired module 147, the rechargeable product autonomously performs the firmware version upgrade. The rechargeable product upgrade command received by the charging station 1 may be sent by the system administrator to the charging station 1 or the rechargeable product through the cloud server or the mobile APP. As can be seen, the embodiments of the present application can achieve the background connection upgrade of the charging station 1 and the firmware version upgrade of the connection between the rechargeable product and the charging station.

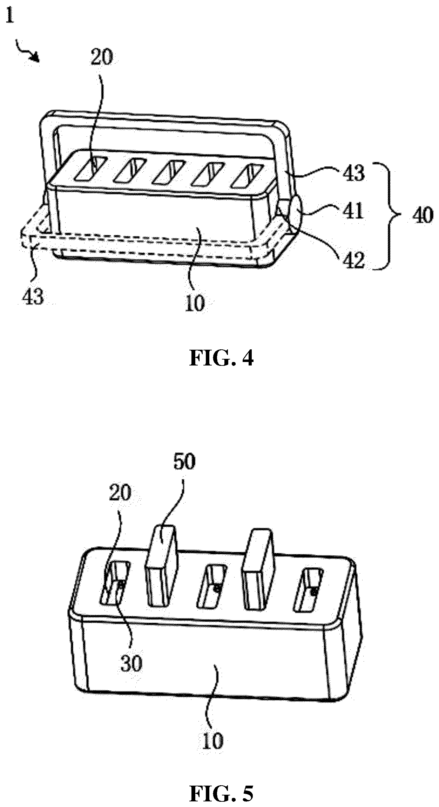

The embodiments of the present application further provide a charging station. FIG. 4 is a schematic diagram of the structure of a charging station according to an embodiment of the present application, and FIG. 5 is a schematic diagram of the structure of a charging station with rechargeable products inserted according to an embodiment of the present application. With reference to FIGS. 4 and 5, the charging station 1 includes a machine body 10 and a movable mechanical arm 40.

Multiple charging slots 20 are provided on the top of the machine body 10, and a charging interface 30 is provided inside each of the multiple charging slots 20.

Each of the two ends of the movable mechanical arm 40 is fixed on a respective one of two sides of the machine body 10. The length direction of the movable mechanical arm 40 is consistent with the arrangement direction of the multiple charging slots 20. A partial structure of the movable mechanical arm 40 in a locked state is located above the multiple charging slots 20 to lock a rechargeable product 50 placed inside a charging slot 20 in the charging slot 20.

In the embodiments of the present application, a mechanical lock function can be achieved by setting the movable mechanical arm 40 on the charging station 1. The movable mechanical arm 40 can be used for fixing the rechargeable product 50 placed on the charging station 1, thereby preventing the rechargeable product 50 from falling from the charging station 1 during the charging process or during the moving of the charging station 1 and ensuring the safety of the rechargeable product 50. In the embodiments of the present application, the rechargeable product 50 placed on the charging station 1 can be prevented from being stolen mechanically, thereby making the product management convenient for the system administrator. The rechargeable product 50 placed on the charging station 1 can be prevented from being accessed by the user during the non-operating time, thereby making the product management convenient for the system administrator. In the embodiments of the present application, the rechargeable product 50 placed on the charging station 1 can be prevented from being directly accessed by the user without authorization in a shared environment or any other open environment, thereby making the product management convenient for the system administrator.

On the basis of the above embodiments, optionally, the multiple charging slots 20 are arranged in at least one row; at least one movable mechanical arm 40 is set; and the movable mechanical arm 40 corresponds to the charging slots 20 arranged in one row.

On the basis of the above embodiments, the movable mechanical arm 40 may be set in various manners, which will be specifically described below.

With continued reference to FIG. 4, in an embodiment of the present application, optionally, the movable mechanical arm 40 includes a control lock 41, a slide 42, and a linkage 43. The linkage 43 is fitted with the slide 42, the linkage 43 is capable of reciprocatively moving in the slide 42, and the control lock 41 is configured to control whether the slide 42 and the linkage 43 are locked.

Optionally, the control lock 41 includes at least one of a mechanical combination lock, a fingerprint combination lock, a manual control button, a manual rotary button, a Bluetooth control lock or a terminal control lock.

Optionally, the slide 42 is a rotary slide 42. The slide 42 is disposed at both ends of the movable mechanical arm 40, and the linkage 43 rotatably moves in the slide 42. In the locked state, the linkage 43 is disposed above the charging slots 20 to lock the rechargeable products 50 placed inside the charging slots 20 in the charging slots 20; in the non-locked state, the linkage 43 is disposed on the side of the machine body 10.

Optionally, the linkage 43 may reciprocatively move in the slide 42 (which may be made of a rubber damping material) to perform the actions of lifting and lowering, thereby achieving the effect of extending and contracting the locking arm and achieving the locking and unlocking of the electromechanical lock. After the user or the system administrator performs operations in close proximity in any of the above manners, the linkage 43 moves in the slide 42, thereby ultimately achieving the effect of extending and contracting the locking arm and achieving the locking and unlocking of the movable mechanical arm 40. The movable mechanical arm 40 may also be controlled remotely (including through a Bluetooth connection or through a connection with the terminal), and after the user or the system administrator performs remote operations in any of the above manners, the linkage 43 moves in the slide 42, thereby ultimately achieving the effect of extending and contracting the locking arm and achieving the locking and unlocking of the movable mechanical arm 40.

In another embodiment of the present application, optionally, the slide 42 is a straight-line slide 42, and the linkage 43 retractablely moves in the slide 42. In the locked state, the linkage 43 is located at a first distance above the charging slots 20 to lock the rechargeable products 50 placed inside the charging slots 20 in the charging slots 20; in the non-locked state, the linkage 43 is located at a second distance above the charging slots 20; where the second distance is greater than the first distance.

On the basis of the above embodiments, optionally, a data transmission interface is further provided on the machine body 10. The data transmission interface is connected to the memory provided inside the charging station, and the data transmission interface is configured to transmit data in the memory. The data transmission interface may be a network interface or an interface having a data transmission function such as a USB interface. Optionally, during use, the administrator of the charging station may connect the mobile terminal device such as a PC to the charging station through a wired connection, for example, through a wiring harness capable of data transmission, such as a network cable or a data cable, to extract all of the information stored in the memory of the charging station about the charging station and the rechargeable product.

It is to be noted that the shape of the charging station 1, the shape of the charging slot 20, the number of the charging slots 20, the type of the charging interface 30 in the charging slot 20, and the shape of the rechargeable product 50 in the embodiments of the present application may be set according to actual requirements.

On the basis of the above embodiments, optionally, the embodiments of the present application provide the charging slot 20. The charging slot 20 has a set shape. The shape of the rechargeable product 50 matches the shape of the charging slot 20 so that the rechargeable product 50 can be jammed into the charging slot 20. The charging interface of the rechargeable product 50 matches the charging interface 30 of the charging station 1, and then the charging station 1 matches the rechargeable product 50. The charging station can read the pairing information of the matched rechargeable product 50.

Optionally, for a rechargeable product 50 which does not match the charging station 1, if the rechargeable product 50 is able to be placed into the charging slot 20 and the charging interface of the rechargeable product 50 matches the charging interface 30 of the charging station 1, the rechargeable product 50 may be charged through the charging station 1, but the charging station 1 cannot read the pairing information.

Optionally, the charging slot 20 is set as an open base, and the charging station 1 has an open mode and a restricted mode (which may be set by the system administrator). In the open mode, for any rechargeable product 50, as long as the charging interface of the rechargeable product 50 is adapted to the charging interface 30 of the charging station 1, the rechargeable product 50 may be charged by the charging station 1, thereby achieving the basic charging function. However, generally, the information of the rechargeable product 50 cannot be obtained through normal communication so the rechargeable product 50 cannot be managed through the charging station 1. In the restricted mode, only the matched rechargeable product 50 can be charged through the charging station 1.

On the basis of the above embodiments, optionally, the machine body 10 of the charging station 1 is provided with an indicator light. The color and number of the indicator lights may be set according to requirements, and the indicator light may be controlled by the control circuit 141. According to the data collected by the various sensors 144, different types of information are compared with a preset alarm model, and then different types of warning information are correspondingly generated. The indicator light may flash with different colors and at different frequencies, depending on the types of warning information, to remind the user or the system administrator. For example, when the data of the smoke sensor among the sensors 144 exceeds the standard, a smoke alarm is generated, and the control circuit 141 controls a red indicator light to be constantly lit. For example, when the data of the temperature sensor among the sensors 144 exceeds the standard, a high temperature alarm is generated, and the control circuit 141 controls another red indicator light to constantly blink. For example, when the data of both the temperature sensor and the smoke sensor among the sensors 144 exceed the standard, a high temperature alarm and a smoke alarm are generated, and the control circuit 141 controls two red indicator lights to be constantly lit.

It is to be understood that various forms of processes shown above may be adopted with steps reordered, added, or deleted. For example, the steps described in the present application may be performed in parallel, sequentially, or in different sequences, as long as the desired results of the solutions of the present application can be achieved.

## Claims

1. A control method for a charging station system, comprising:
establishing a communication connection between a plurality of charging stations and a cloud;
establishing a communication connection between the plurality of charging stations and a terminal; and
establishing a communication connection between the cloud and the terminal;
wherein in an operation process of a charging station of the plurality of charging stations, the charging station provides a charge/discharge management function for at least one rechargeable product; the at least one rechargeable product transmits data to the charging station through at least one of a physical connection or a wireless connection to achieve a data transmission function; and the charging station uploads collected data to the cloud to achieve a data communication function.

2. The control method for a charging station system according to claim 1, further comprising:
acquiring initial pairing information between the charging station and a rechargeable product placed on the charging station;
acquiring a serial number of the rechargeable product placed on each of the plurality of charging stations in real time, and performing comparative analysis on the serial number and the initial pairing information to determine whether a placement position of the rechargeable product changes; and
if the placement position of the rechargeable product changes, refreshing pairing information between the charging station and the rechargeable product.

3. The control method for a charging station system according to claim 2, further comprising:
collecting usage information of a plurality of rechargeable products, wherein the usage information comprises at least one of information on a type of interface used by a rechargeable product, a usage duration of a rechargeable product or a type of protection triggered by a rechargeable product; and
uploading the usage information to the cloud.

4. The control method for a charging station system according to claim 1, further comprising:
collecting monitoring information of a plurality of rechargeable products, wherein the monitoring information comprises at least one of a cell temperature of a rechargeable product, a temperature at a temperature sampling point set inside a rechargeable product, a remaining charge level of a battery pack of a rechargeable product or a voltage of a battery pack of a rechargeable product; and
uploading the monitoring information to the cloud.

5. The control method for a charging station system according to claim 1, further comprising:
collecting a real-time charge level of a plurality of rechargeable products; and
matching different charge rates for rechargeable products having different real-time charge levels based on a preset charge management strategy under a control of a control circuit.

6. The control method for a charging station system according to any one of claims 2 to 5, wherein a method for collecting information of a rechargeable product comprises:
acquiring, by the charging station, the information of the rechargeable product through wireless communication; and collecting, by a data collection circuit provided inside the charging station, the information of the rechargeable product, and storing the information in a memory; or
acquiring the information of the rechargeable product when the rechargeable product is physically connected to an interface provided inside a charging slot of the charging station; and collecting, by a data collection circuit provided inside the charging station, the information of the rechargeable product, and storing the information in a memory;
the method for collecting information of a rechargeable product is applied to at least one of a serial number, usage information, monitoring information or a real-time charge level of the rechargeable product.

7. The control method for a charging station system according to claim 1, further comprising:
determining, by a digital timer provided inside the charging station, whether a rechargeable product placed on the charging station is in a long-term storage state;
if a duration when the rechargeable product is in the long-term storage state exceeds a first duration, discharging the rechargeable product to a safe charge level under a control of a control circuit; and
if the duration when the rechargeable product is in the long-term storage state exceeds a second duration, disabling a wall-plug function to enable the charging station no longer to charge the rechargeable product; and after power of the rechargeable product and/or the charging station is completely exhausted, recharging the rechargeable product and/or the charging station to reactivate a battery cell, and restoring a charging station system to an initial state;
wherein the second duration is longer than the first duration.

8. The control method for a charging station system according to claim 7, wherein the determining whether a rechargeable product placed on the charging station is in a long-term storage state comprises:
if the rechargeable product does not enter an operating state or a duration when the rechargeable product does not have an output exceeding a static consumption exceeds a set duration, determining the rechargeable product placed on the charging station is in the long-term storage state.

9. The control method for a charging station system according to claim 1, further comprising:
detecting, by a sensor provided inside the charging station, environment information;
collecting, by a data collection circuit provided inside the charging station, the environment information, and storing the environment information in a memory; and
synchronizing the environment information to the terminal; and/or
feeding, by the data collection circuit, the environment information back to a control circuit, and controlling, by the control circuit, an operating state of the charging station.

10. The control method for a charging station system according to claim 9, wherein the feeding, by the data collection circuit, the environment information back to a control circuit and controlling, by the control circuit, an operating state of the charging station comprises at least one of:
if a detected ambient temperature is higher than a first set temperature, controlling the charging station to reduce a charge power;
if the detected ambient temperature is higher than a second set temperature, controlling the charging station to cut off a power supply; and
if the detected ambient temperature is higher than a third set temperature, controlling an emergency pack provided inside the charging station to be opened and release a cooling substance;
wherein the second set temperature is higher than the first set temperature, and the third set temperature is higher than the second set temperature.

11. The control method for a charging station system according to claim 1, further comprising:
detecting operating parameter information of the charging station in real time;
collecting, by a data collection circuit provided inside the charging station, the operating parameter information, and storing the operating parameter information in a memory and/or uploading the operating parameter information to the cloud; and
comparing, by a control circuit provided inside the charging station, the operating parameter information with a preset data model, and giving an alarm if data is abnormal; and/or
sending warning information to the terminal after an abnormality is found through analysis in the cloud.

12. The control method for a charging station system according to claim 1, wherein the charging station and the rechargeable product each further have a firmware version upgrade function.

13. A charging station system, comprising a plurality of charging stations, a cloud, and a terminal; wherein
a communication connection is established between the plurality of charging stations and the cloud; a communication connection is established between the plurality of charging stations and the terminal; and a communication connection is established between the cloud and the terminal;
wherein in an operation process of a charging station of the plurality of charging stations, the charging station provides a charge/discharge management function for at least one rechargeable product; the at least one rechargeable product transmits data to the charging station through at least one of a physical connection or a wireless connection to achieve a data transmission function; and the charging station uploads collected data to the cloud to achieve a data communication function.

14. A charging station, comprising:
an input interface, wherein the input interface is connected to an external power supply voltage through an adapter wire;
a conversion circuit, wherein the conversion circuit is electrically connected to the input interface and is configured to convert the external power supply voltage into an internal voltage adapted to the charging station;
a power supply system and a function module, wherein the power supply system is electrically connected to the input interface, and the power supply system supplies power to the function module inside the charging station by using the external power supply voltage;
wherein the function module comprises a control circuit, a memory, and a wireless module; the control circuit is configured to control a rechargeable product to be charged and discharged to achieve a charge/discharge management function; the memory is configured to store data; the wireless module and the memory perform data transmission; the wireless module is configured to upload collected data to a cloud to achieve a data communication function.

15. A charging station, comprising:
a machine body, wherein a plurality of charging slots are provided on a top of the machine body, and a charging interface is provided inside each of the plurality of charging slots; and
a movable mechanical arm, wherein each of two ends of the movable mechanical arm is fixed on a respective one of two sides of the machine body, and a length direction of the movable mechanical arm is consistent with an arrangement direction of the plurality of charging slots; a partial structure of the movable mechanical arm in a locked state is located above the plurality of charging slots to lock a rechargeable product placed inside a charging slot of the plurality of charging slots in the charging slot.

16. The charging station according to claim 15, wherein the movable mechanical arm comprises a control lock, a slide, and a linkage;
wherein the linkage is fitted with the slide, the linkage is capable of reciprocatively moving in the slide, and the control lock is configured to control whether the slide and the linkage are locked;
wherein the control lock comprises at least one of a mechanical combination lock, a fingerprint combination lock, a manual control button, a manual rotary button, a Bluetooth control lock or a terminal control lock.

17. The charging station according to claim 15, wherein a data transmission interface is provided on the machine body, and the data transmission interface is connected to a memory of the charging station; and the data transmission interface is configured to transmit data in the memory.
